# EUROPÄISCHE PATENTSCHRIFT

(11) **EP 0 440 890 B1**
(45) Veröffentlichungstag und Bekanntmachung des Hinweises auf die Patenterteilung: **16.03.1994**
(21) Anmeldenummer: 90121598.8
(22) Anmeldetag: 12.11.1990
(51) Int. Cl.: F16L 33/22

(54) **Schlauchanschluss**
Hose connection
Connexion de tuyaux souples

(30) Priorität: 08.02.1990 DE 4003740
(43) Veröffentlichungstag der Anmeldung: 14.08.1991
(73) Patentinhaber: Firma Carl Freudenberg, 69469 Weinheim (DE)
(72) Erfinder: Budde, Volker, W-6711 Grosskarlbach (DE); Meissner, Eckhard, W-6940 Weinheim-Grosssachsen (DE)

(56) Entgegenhaltungen:
- DE-A- 3 017 375
- DE-A- 3 729 057
- DE-U- 1 997 160
- FR-A- 955 523
- US-A- 4 750 764

## Beschreibung

Die Erfindung betrifft einen Schlauchanschluß nach dem Oberbegriff von Anspruch 1.

Ein solcher Schlauchanschluß ist aus der DE-OS 30 17 375 bekannt. Die Schlauchtülle ist in axialer Richtung einerseits durch einen sich in radialer Richtung nach außen erstreckenden Flansch und in axialer Richtung andererseits durch einen widerhakenförmigen, sich ebenfalls ringförmig erstreckenden Vorsprung begrenzt, wobei der zu befestigende Schlauch hohlzylinderförmig ausgebildet ist und eine entlang seiner axialen Erstreckung übereinstimmende Wändstärke aufweist. Der Schlauch wird im Bereich zwischen den Stirnseiten der Schlauchtülle durch eine grundsätzlich napfförmig gestaltete Hülse flüssigkeitsdicht auf der Schlauchtülle gehalten, wobei die Hülse im Bereich der stirnseitigen Begrenzung des Schlauchs mit Ausnehmungen versehen ist, um eine Sichtkontrolle der Verbindung zu ermöglichen. Dabei ist allerdings zu beachten, daß die Handhabung des Schlauchanschlusses wenig befriedigend ist.

Aus der DE-PS 37 29 057 ist ein Schlauchanschluß bekannt, bei dem die Schlauchtülle mit mehreren in axialer Richtung aufeinanderfolgenden Ausnehmungen versehen ist, welche bevorzugt ein sägezahnförmiges Profil haben mit einem Boden, an den der in hohlzylindrische Gestalt erzeugte Schlauch beim Aufschieben des im wesentlichen unverformbaren Spannringes flüssigkeitsdicht angepreßt wird. In den Zwischenzonen der Ausnehmung ergibt sich hierbei eine starke Deformierung der Schlauchwandung, die eine Schädigung des Werkstoffkörpers und einen vorzeitigen Ausfall des Schlauchanschlusses zur Folge haben kann.

Der Erfindung liegt die Aufgabe zugrunde, einen Schlauchanschluß der eingangs genannten Art derart weiterzuentwickeln, daß sich bei einfacher Montierbarkeit eine Verbesserung der Haltbarkeit ergibt.

Diese Aufgabe wird erfindungsgemäß bei einem Schlauchanschluß der eingangs genannten Art dadurch gelöst, daß der Spannring in einer in den Außenumfang des Schlauchs eingreifenden Nut angeordnet ist. Die Schlauchwandung kann in allen Teilbereichen eine im wesentlichen übereinstimmende Dicke haben, während die Ausnehmung in radialer Richtung eine Tiefe hat, die höchstens so groß ist wie die Dicke der Schlauchwandung, bevorzugt eine Tiefe, die 0,25 bis 0,66 mal so groß ist wie die Dicke der Schlauchwandung. Der Schlauch läßt sich dadurch problemlos und unter Vermeidung der Gefahr einer Beschädigung der Schlauchwandung in axialer Richtung auf die Schlauchtülle aufschieben und so plazieren, daß sich ein durchgehender Berührungskontakt zwischen den in bezug auf Form und Größe im wesentlichen übereinstimmend gestalteten Dichtflächen der Ausnehmung und des Schlauches ergibt. Der Spannring wird anschließend auf die so erhaltene Anordnung in axialer Richtung aufgeschoben, bis der Spannring in die Nut des Schlauches einschnappt. Er besteht ebenso wie die Schlauchtülle aus unnachgiebigem Werkstoff, beispielsweise aus Metall. Die bei Erreichen der Einrastverbindung erzielte, dichtende Anpressung des Schlauches an den Boden der Ausnehmung ist dadurch von besonders guter Dauerhaftigkeit. Sie läßt sich problemlos unter Vermeidung spezifischer Werkstoffüberlastungen erreichen, was Ermüdungserscheinungen des polymeren Werkstoffes des Schlauches langfristig vorbeugt. Zusätzlich wird in axialer Richtung eine formschlüssige Verbindung zwischen dem Schlauch und der Schlauchtülle erreicht, was die Übertragung großer Axialkräfte ermöglicht.

Die Nut hat zweckmäßig eine axiale Länge, die mit derjenigen der Ausnehmung im wesentlichen übereinstimmt und 2 bis 8 mal, vorteilhafter 4 bis 6 mal so groß ist wie die radiale Dicke der Schlauchwandung in dem angegebenen Bereich. Auch bei Verwendung üblicher Gummiqualitäten für die Herstellung des Schlauches und unter Berücksichtigung von Relaxationserscheingungen läßt sich hierdurch langfristig ein ausgezeichnetes Abdichtungsergebnis gewährleisten.

Die Nut kann zumindest in einem ersten Teilbereich einen Nutgrund aufweisen, der sich im wesentlichen parallel zu dem Boden der Ausnehmung erstreckt. Die elastische Deformierung, die sich nach dem Aufschieben des Spannringes ergibt, ist hierdurch in allen Teilbereichen weitgehend ausgeglichen, was die Erzielung einer guten Gebrauchsdauer unterstützt.

Die Nut kann zumindest in einem zweiten Teilbereich einen Nutgrund aufweisen, der kegelig in Richtung der axialen Begrenzung der Nut in seinem Durchmesser erweitert ist. Der Spannring hat innenseitig ein entsprechendes Profil, was seine axiale Relativverschiebung in bezug auf den Schlauch erleichtert und dessen Beschädigung bei der Montage verhindert.

Der Spannring, besteht bevorzugt aus tiefgezogenem Blech, beispielsweise aus Stahlblech. Er kann zumindest an einem Ende mit einem radial nach außen vorstehenden Ringwulst versehen sein, um ein Montagehilfswerkzeug leichter ansetzt und für die Montage erforderlichen Kräfte einleiten zu können. Ein entsprechendesr Ringwulst kann an wenigstens einer Umfangsstelle mit einer axialen Ausnehmung oder Durchbrechung versehen sein, um eine Relativverdrehung des im übrigen völlig rotationssymmetrisch gestalteten Spannringes während der Montage zu ermöglichen. Das nachträgliche Einfügen des Spannringes in die Nut durch axiale Relativverschiebung in bezug auf den Schlauch wird hierdurch erleichtert.

Der erfindungsgemäße Schlauchanschluß ist montagefreundlich und von besonders guter Dauerhaftigkeit. Er läßt sich dadurch auch auf artverwandten Gebieten problemlos einsetzen, beispielsweise bei der Festlegung und Abdichtung der zu den Gleichlaufgelenken eines Kraftfahrzeuges gehörigen Faltenbälgen.

Der Gegenstand der Erfindung wird nachfolgend anhand der in der Anlage beigefügten Zeichnung weiter verdeutlicht. Es zeigen jeweils in halbgeschnittener Darstellung:
Fig. 1: Ein Schlauchanschlutß mit einem nachträglich zugeführten Spannring.
Figur 2: Ein Schlauchanschluß, bei dem der Spannring vor seiner endgültigen Fixierung in der Nut auf dem Schlauch gelagert ist.

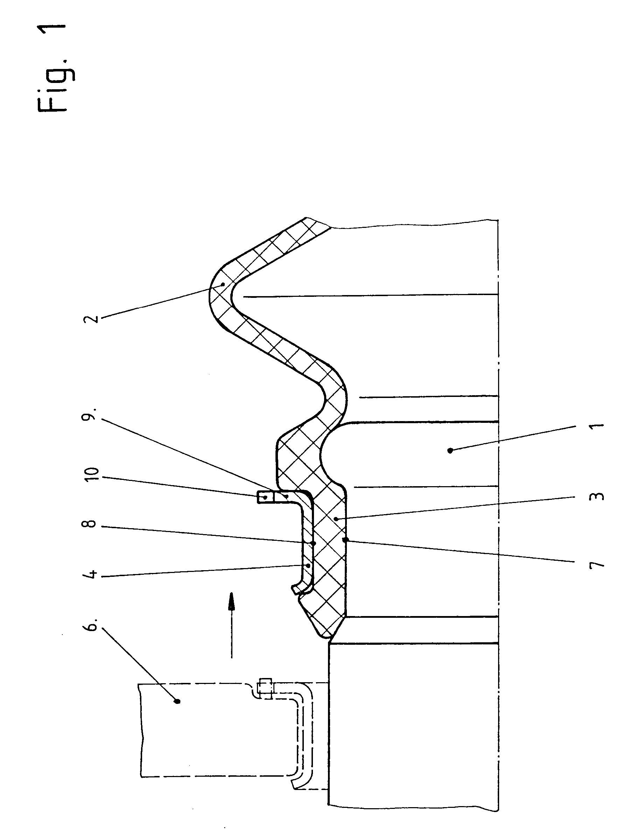

Der in Figur 1 gezeigte Schlauchanschluß umfaßt eine Schlauchtülle 1 mit einer in deren Außenumfang eingreifenden, ringförmigen Ausnehmung 7, einen die Ausnehmung 7 in axialer Richtung überlappenden Schlauch 3, der aus gummielastischem Werkstoff besteht und das Ende eines Faltenbalges 2 bildet sowie einen unnachgiebigen Spannring 4, der mit Hilfe eines Aufpreßwerkzeuges 6 nachträglich auf den Schlauch 3 aufgeschoben und in einer in den Außenumfang des Schlauches 3 eingreifenden Nut 8 angeordnet wird. Die einander berührenden Flächen des Spannringes 4 und des Schlauches 3 sind im wesentlichen übereinstimmend gestaltet und in Umfangsrichtung kontinuierlich durchgehend ausgebildet. Sie sind hinsichtlich der Dimensionen so aneinander angepaßt, daß sich nach dem axialen Einfügen des Spannringes 4 in die Nut des Schlauches 3 eine flüssigkeitsdichte Anpreßung der Innenseite des Schlauches an den Boden der Ausnehmung 7 ergibt. Die Innenseite kann zur Verbesserung des Abdichtungsergebnisses gegebenenfalls mit einer sich in Umfangsrichtung erstreckenden Feinrippung versehen sein.

Der Spannring 4 besteht aus tiefgezogenem Stahlblech und hat ein im wesentlichen U-förmiges Profil. Er ist im wesentlichen rotationssymmetrisch gestaltet, wobei einer der stirnseitigen Flansche 9 mit einer axialen Durchbrechung 10 versehen ist, beispielsweise in Gestalt einer Kerbe. Diese ist während des Aufschiebens mit einem axialen Vorsprung des Aufpreßwerkzeuges 6 in Eingriff bringbar, was es ermöglicht, den Spannring 4 während des Aufschiebevorganges um die Achse des Schlauchanschlusses zu verdrehen. Der Fügevorgang wird hierdurch erleichtert.

Die axiale Länge der Ausnehmung 7 beträgt bei dem gezeigten Ausführungsbeispiel etwa 30 mm bei einer radialen Dicke der Wandung des Schlauches 3 in der Zwischenzone zwischen dem Spannring 4 und dem Boden der Ausnehmung 7 von etwa 8 mm. Die radiale Tiefe der Ausnehmung 7 beträgt etwa 6 mm.

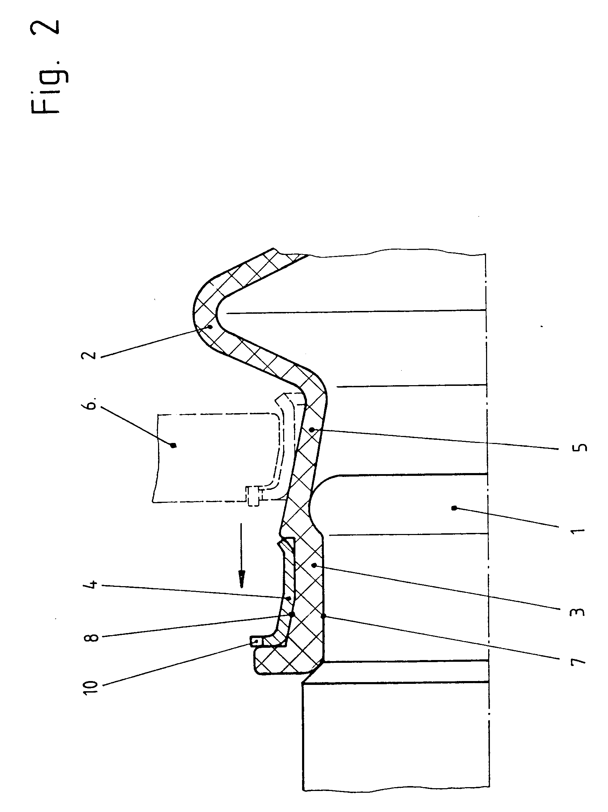

Die in Figur 2 gezeigte Ausführung unterscheidet sich von der vorstehend beschriebenen im wesentlichen dadurch, daß der Spannring 4 vor dem Beginn des Fügevorganges bereits auf dem Schlauch 3 angebracht wird, und zwar auf einem im wesentlichen zylindrisch ausgebildeten Abschnitt 5, der der Nut 8 axial benachbart ist. Das Einschnappenlassen in die Ausnehmung erfolgt im gleichen Sinne wie vorstehend beschrieben.

## Patentansprüche

1. Schlauchanschluß, umfassend eine Schlauchtülle (1) mit einer in ihren Außenumfang eingreifenden, ringförmigen Ausnehmung (7), einen die Ausnehmung (7) in axialer Richtung überlappenden Schlauch (3) aus elastisch verformbarem Werkstoff sowie einen unnachgiebigen Spannring (4), der den Schlauch (3) mit einer umlaufenden Fläche kontinuierlich durchgehend berührt und dichtend mit dem Boden der Ausnehmung (7) verpreßt, wobei die einander berührenden Flächen des Schlauches (3) und des Spannringes (4) herstellungsbedingt einander im wesentlichen nach Form und Größe entsprechen, wobei der Spannring (4) in axialer Richtung eine Länge aufweist, die höchstens so groß ist wie die Länge der Ausnehmung (7) und wobei die Ausnehmung (7) und der Schlauch (3) einander mit Dichtflächen berühren, die im wesentlichen übereinstimmend gestaltet sind, dadurch gekennzeichnet, daß der Spannring (4) in einer in den Außenumfang des Schlauchs (3) eingreifenden Nut (8) angeordnet ist.

2. Schlauchanschluß nach Anspruch 1, dadurch gekennzeichnet, daß die Nut (8) eine axiale Länge aufweist, die mit derjenigen der Ausnehmung (7) im wesentlichen übereinstimmt.

3. Schlauchanschluß nach Anspruch 1 bis 2, dadurch gekennzeichnet, daß die Nut (8) zumindest in einem ersten Teilbereich einen Nutgrund aufweist, der sich im wesentlichen parallel zu dem Boden der Ausnehmung (7) erstreckt.

4. Schlauchanschluß nach Anspruch 3, dadurch gekennzeichnet, daß die Nut (8) zumindest in einem zweiten Teilbereich einen Nutgrund aufweist, der kegelig in Richtung der axialen Begrenzung der Nut (8) in seinem Durchmesser erweitert ist.

5. Schlauchanschluß nach Anspruch 1 bis 4, dadurch gekennzeichnet, daß der Spannring (4) aus tiefgezogenem Blech besteht.

6. Schlauchanschluß nach Anspruch 5, dadurch gekennzeichnet, daß der Spannring (4) zumindest an einem Ende mit einem radial nach außen vorstehenden Ringwulst (9) versehen ist.

7. Schlauchanschluß nach Anspruch 6, dadurch gekennzeichnet, daß der Ringwulst (9) an wenigstens einer Umfangsstelle mit einer axialen Ausnehmung oder Durchbrechung (10) versehen ist.

## Claims

1. A hose connection, comprising a hose nozzle (1) having an annular recess (7) which is formed in its outer circumference, a hose (3) made of elastically deformable material which overlaps the recess (7) in the axial direction, and a non-resilient clamping ring (4) which continuously contacts the hose (3) with a circumferential surface and presses it in a sealing manner with the bottom of the recess (7), the mutually contacting surfaces of the hose (3) and of the clamping ring (4) substantially corresponding to one another in shape and size due to their manufacture, the clamping ring (4) having a length in the axial direction which is at most the same size as the length of the recess (7), and the recess (7) and the hose (3) contacting one another with sealing surfaces which are of substantially corresponding design, characterized in that the clamping ring (4) is arranged in a groove (8) which is formed in the outer circumference of the hose (3).

2. A hose connection according to claim 1, characterized in that the groove (8) has an axial length which substantially corresponds to that of the recess (7).

3. A hose connection according to either of claims 1 and 2, characterized in that the groove (8) has, at least in a first partial region, a groove base which extends substantially parallel to the bottom of the recess (7).

4. A hose connection according to claim 3, characterized in that the groove (8) has, at least in a second partial region, a groove base which is widened conically in its diameter in the direction of the axial boundary of the groove (8).

5. A hose connection according to any of claims 1 to 4, characterized in that the clamping ring (4) consists of deep-drawn sheet metal.

6. A hose connection according to claim 5, characterized in that the clamping ring (4) is provided, at least at one end, with a radially outwardly projecting annular bead (9).

7. A hose connection according to claim 6, characterized in that the annular bead (9) is provided, at least at one place on the circumference, with an axial recess or opening (10).

## Revendications

1. Raccord de tuyau souple, comportant une gaine (1) pourvue d'un évidement (7) de forme annulaire, pénétrant dans son pourtour extérieur, un tuyau souple 3 recouvrant l'évidement (7) dans une direction axiale et constitué d'un matériau élastiquement déformable, ainsi qu'une bague de serrage (4) non flexible, qui est en contact continu avec le tuyau souple (3) par une surface périphérique et qui est appliquée de façon étanche contre le fond de l'évidement (7), les surfaces du tuyau souple (3) et de la bague de serrage (4) qui sont en contact mutuel ayant du fait de la fabrication des formes et des grandeurs qui se correspondent dans l'essentiel, la bague de serrage (4) ayant dans une direction axiale une longueur qui est au maximum aussi grande que la longueur de l'évidement (7) et cet évidement (7) ainsi que le tuyau souple (3) étant en contact mutuel par des surfaces d'étanchéité qui sont agencées avec des profils se correspondant mutuellement, raccord caractérisé en ce que la bague de serrage (4) est disposée dans une rainure (8) pénétrant dans le pourtour extérieur du tuyau souple (3).

2. Raccord de tuyau souple selon la revendication 1, caractérisé en ce que la rainure (8) a une longueur axiale correspondant dans l'essentiel à celle de l'évidement (7).

3. Raccord de tuyau souple selon une des revendications 1 et 2, caractérisé en ce que la rainure (8) comporte au moins dans une première zone partielle un fond qui est orienté dans l'essentiel parallèlement au fond de l'évidement (7).

4. Raccord de tuyau souple selon la revendication 3, caractérisé en ce que la rainure (8) comporte au moins dans une seconde zone partielle un fond dont le diamètre est agrandi avec un profil conique en direction de la délimitation axiale de la rainure (8).

5. Raccord de tuyau souple selon une des revendications 1 à 4, caractérisé en ce que la bague de serrage (4) est formée de tôle emboutie.

6. Raccord de tuyau souple selon la revendication 5, caractérisé en ce que la bague de serrage (4) est pourvue, au moins à une extrémité, d'un bourrelet annulaire (9) faisant saillie radialement vers l'extérieur.

7. Raccord de tuyau souple selon la revendication 6, caractérisé en ce que le bourrelet annulaire (9) est pourvu, au moins dans une zone de sa périphérie, d'une découpure ou évidement axial (10).
